Europäisches Patentamt

European Patent Office

Office européen des brevets

(11) Publication number: **0 039 554**
A1

# EUROPEAN PATENT APPLICATION

(21) Application number: **81301776.1**

(22) Date of filing: **22.04.81**

(51) Int. Cl.³: **G 09 G 1/16, H 04 N 5/10, H 04 N 7/04**

(30) Priority: **30.04.80 GB 8014285**

(43) Date of publication of application: **11.11.81** Bulletin 81/45

(84) Designated Contracting States: **AT BE CH DE FR GB IT LI LU NL SE**

(71) Applicant: **THE POST OFFICE, 23 Howland Street, London W1P 6HQ (GB)**

(72) Inventor: **White, Trevor Anthony, 85 Western Avnue, Felixstowe Suffolk (GB)**

(74) Representative: **Smith, Norman Ian et al, F.J. CLEVELAND & COMPANY 40-43 Chancery Lane, London WC2A 1JQ (GB)**

(54) **Improvements in or relating to display units for use in viewdata/teletext system.**

(57) A television type display unit for use in a viewdata or teletext type system has a control circuit which is arranged to trigger the second of two scans which produce a picture frame such that the lines of the second scan substantially completely overlie the lines of the first scan. This arrangement removes flicker which can occur particularly when characters or graphics are being displayed on conventional displays. The result can be achieved by applying pulses to the output of the integrator of the sync separator 55 by means of a pulse generator 63. The timing of the pulses is such that the second scan overlies the first scan.

- 2 -

## DESCRIPTION

This invention relates to systems of the viewdata or teletext type in which information can be transmitted from a central information store to a plurality of terminals for display on display units. The invention particularly relates to the display units used in such systems.

In systems of this type each terminal has a television type display device for displaying the transmitted information. Such devices use what is known as a two to one interlaced scan. This means that each picture frame is made up of two fields, the first field comprising odd numbered picture lines for example and consequently, the second field comprising the even numbered picture lines. During a first scan the odd numbered picture lines are produced and during a second scan the even numbered picture lines are produced intermediate to the odd numbered picture lines. The result is that adjacent lines are in counter phase and this can give rise to unpleasant scintillation effects on sharp horizontal edges. Such effects are not normally of importance in broadcast television when quite often moving picture material is transmitted. However, they can be marked when stationary material such as particular text or graphics is being displayed. The major visual effect is one of vertical positional jitter caused by the interlaced nature of the scan, an effect which is uncomfortable and tiring to the eyes. The text in the teletext or viewdata type system is usually refreshed at 25Hz. Thus, if a horizontal line of character has a width which extends over for example picture lines 3 and 4 the line width will therefore flicker at 25Hz between lines 3 and 4. Various methods have been proposed in order to reduce or remove this interline flicker and these are briefly as follows.

A first solution proposed is to increase the persistence of the phosphor of the screen of the television. This can reduce both interline flicker and large area flicker but gives rise to blurring of pictures which involve moving objects.

A second solution is to increase the refresh rate which reduces both interline flicker and large area flicker. However, such a solution is only practically possible for systems with a local picture store since channel band width would otherwise have to be increased. Furthermore, modifications to the line and field scan circuitry are required.

A third proposal is what is known as spot wobble. This is a method for reducing the visibility of the scan structure and possibly, therefore, the interline flicker. The vertical positional jitter resulting from the interlaced scan is however related to the separation and luminance of adjacent lines. The method is not effective in reducing interline flicker.

A fourth solution is vertical spatial filtering. This method spreads the width of a horizontal character line e.g. a character line on picture lines 3 and 4 would be represented by having half the third line intensity on line 2 and having half the fourth line intensity on line 5 as well as the lines 3 and 4. The implementation of vertical spatial filtering is highly complicated and requires line delays and arithmetic operators. Furthermore, it is very expensive to put into practice. For text, a simpler implementation would only require a special character memory in the display device which preshaped the vertical character contrast. Such a device could not be used for general graphics display.

The method is not very satisfactory in that considerable blurring of text is incurred before a significant reduction in interline flicker is obtained.

A fifth method is to remove the interlaced scan. Removing the interlaced scan will by definition remove the flicker since it is the interlaced nature of the scan which causes the flicker in the first place. The present invention concerns a technique for removing the interlaced scan.

We propose to remove the interlaced scan by arranging for the first and second fields of a picture frame to overlay one another. This removes the flicker but leads to a reduction in the number of scan lines by the order of interlace used. Furthermore, it should be emphasised that the procedure is only effective where material is electronically generated since, in general, there is not a unidirectional coherence between adjacent lines of a full picture. Also where teletext or viewdata characters are displayed, character roundings should not be present since different information exists on different fields leading to small elements flickering at the original picture rate. Additionally care has to be taken to ensure that the fields are overlayed correctly e.g. if picture line 5 is nominally the same as picture line 6 but differs from line 4 then lines 5 and 6 should be arranged to overlie, not lines 4 and 5.

Thus according to the present invention we provide a television type display unit for use in a viewdata or teletext type system in which the control circuitry of the display unit is arranged to trigger the second of two scans which produce a picture frame such that the lines of the second scan substantially completely overlie the lines of the first scan.  This can be achieved by effectively shifting the synchronising information relating to the second scan by approximately one half of one line period.  In one embodiment of the invention this is achieved by inserting pulses at the output of the field trigger integrator of the control circuit, said pulses being arranged to occur substantially mid-way between the line synchronisation pulses.

The invention will be described now by way of example only with particular reference to the accompanying drawings.  In the drawings:

Figure 1 is a block schematic diagram showing a control circuit for a television receiver;

Figure 2 is a waveform diagram illustrating synchronising information for a first scan of a picture frame of a typical television receiver;

Figure 3 is a waveform diagram showing the output from the integrator and comparator of the trigger control circuit of a television receiver;

Figure 4 is a waveform diagram illustrating the synchronising information for the second scan of a picture frame;

Figure 5 is a waveform diagram illustrating the operation, in respect of the first scan of picture frame, of a television display device modified in accordance with the present invention;

Figure 6 is a waveform diagram similar to Figure 5 for the second scan of a picture frame;

Figure 7 is a schematic circuit diagram illustrating the manner in which a television display device can be modified in accordance with the present invention, and

Figure 8 is a circuit diagram of one way in which the circuit of Figure 7 can be implemented.

In general most television receivers have control circuits which employ an integrator followed by a level comparator to derive the field synchronisation trigger from a composite synchronising signal.

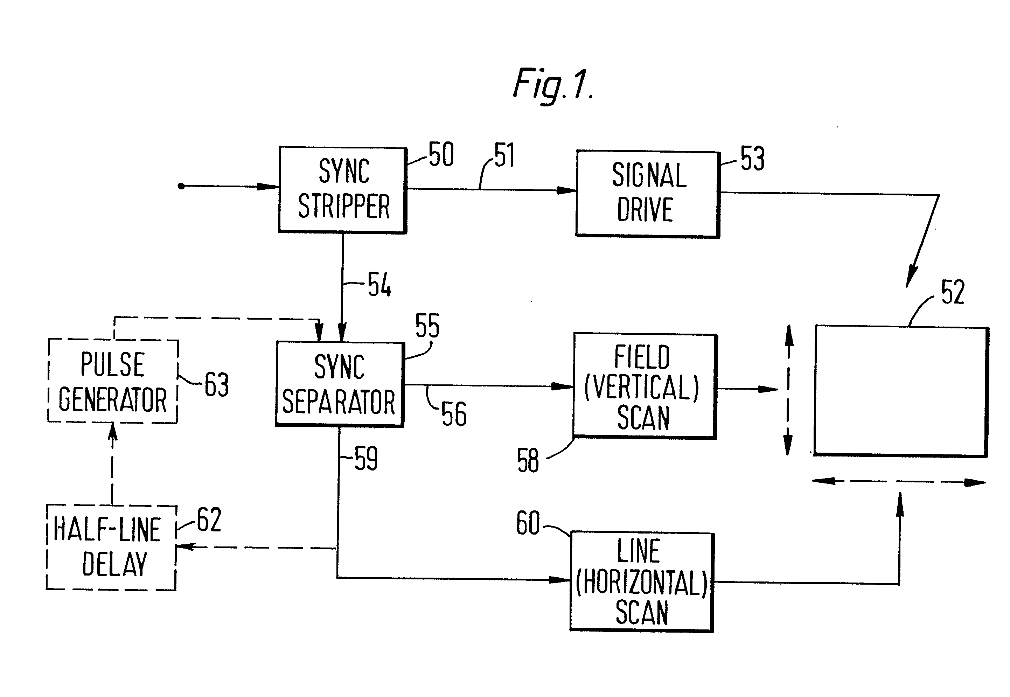

Referring to Figure 1 a control circuit for a television receiver including a sync stripper circuit 50 which is arranged to receive as an input a composite video signal which contains picture/text information together with line and field synchronising information.  The sync stripper 50 has a first output 51 on which appears a video signal which is fed to a display 52 via a signal drive circuit 53.

The sync stripper has a second output which is connected by a line 54 to a sync separator 55. The line 54 carries mixed line and field synchronising signals. The separator 55 has a first output 56 via which are fed field synchronising signals to a field (vertical) scan circuit 58 associated with the display 52. The separator 55 has a second output 59 via which are fed line synchronising signals to a line (horizontal) scan circuit 60 associated with the display 52. Such control circuits are known and will not be described in detail.

The integrator and comparator form part of the separator 55. The integrator has a time constant the value of which is a compromise between the need to ensure accurate field timing and the requirement to retain some noise immunity. The integrator detects the field synchronising information in the composite signal fed to the separator 55 and produces a signal which is fed to a field trigger or scan circuit 58 via the comparator. The comparator is provided to ensure that the field trigger circuit 58 triggers at the correct instant.

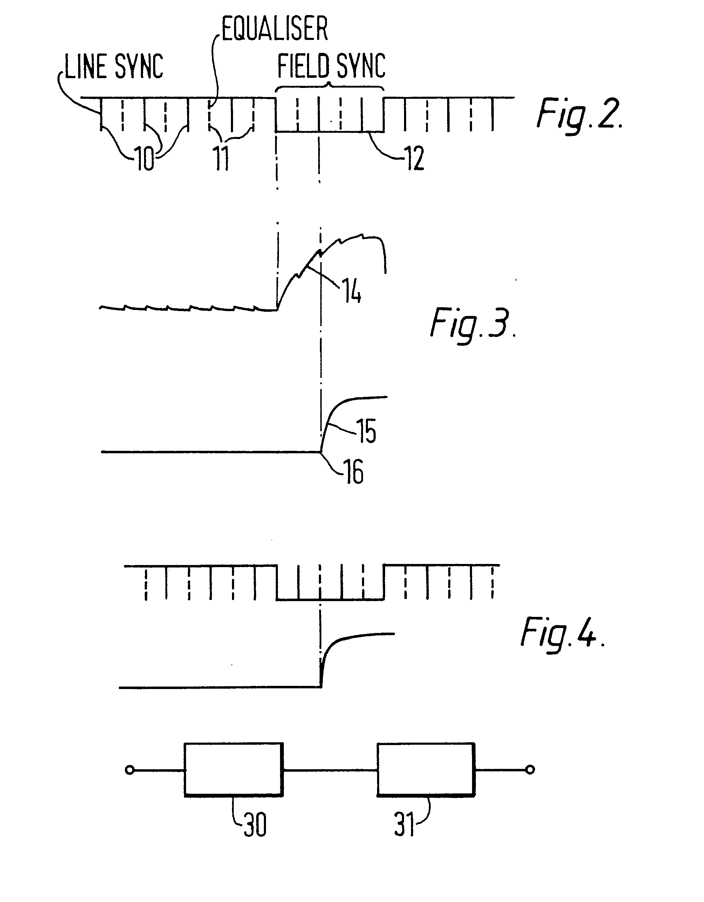

In Figure 2 of the drawings there is shown the composite synchronising signal which is made up of line synchronising pulses 10 for triggering lines which make up a scan, equaliser pulses 11 and field synchronising information 12. The composite signal is applied to the integrator 30 and comparator 31. After integration the field synchronising part of the signal has the form shown at 14 in Figure 3 which also shows the signal 15 from the comparator 31.  Field
switching, i.e. the initiation of a scan
on the display, occurs at the point marked
16 and it will be seen that switching
occurs at an instant corresponding to
one line period after the beginning of the
field synchronising information.  Only the
first field of a two field scan is shown
in Figures 2 and 3.  Figure 4 shows the
comparator output for the second field
when switching occurs also about one
line synchronisation pulse separation into
the field synchronising information.  However,
it will be noted in the latter case the
start is mid-way between two line synchronisation pulses.  In a conventional display the
lines of the second field are located between
the lines of the first field to produce the
interlaced scan.

If the integrator time constant is
arranged to cause switching of the level
comparator one line period into the field
synchronising information as described above
then overlay of the first and second field
scans can be achieved simply by adding
inverted line synchronising pulses of
suitable amplitude and timing.  The timing
of these pulses with respect to the line
synchronising information determines which
field is extended.

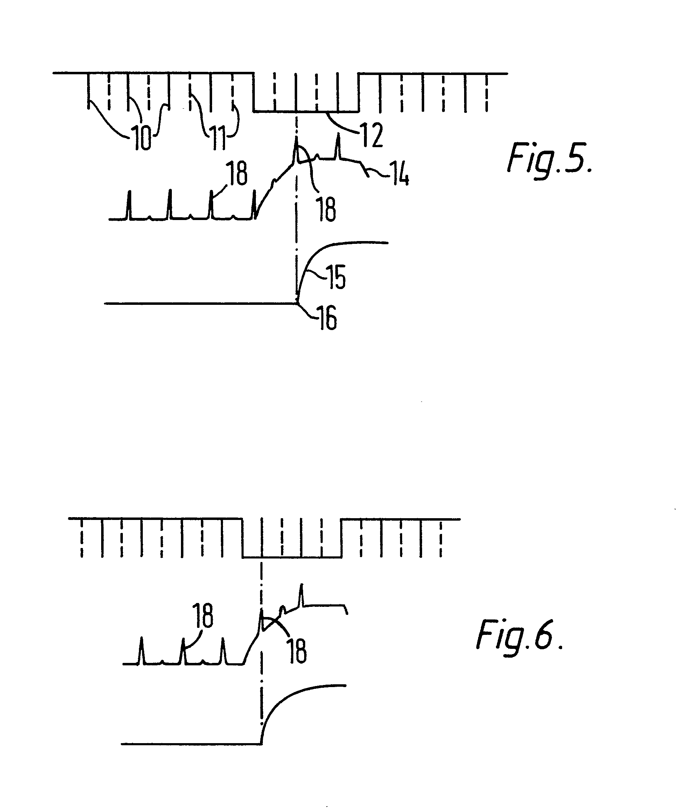

Referring to Figure 5, which shows the
waveforms in respect of the first field
scan of a picture frame, in the present
embodiment pulses 18 are added to the output
of the integrator and occur at the same instants as the line synchronising pulses. The addition of these pulses does not have any effect on the timing of the first field scan which occurs at the same instant as in a conventional receiver.

Referring however, to Figure 6 it will be seen that in the case of the second field scan the pulses 18 are arranged to cause the level comparator to trigger and thereby cause field switching half a line synchronisation pulse separation into the field synchronisation information, i.e. half a line period earlier than in a conventional receiver. This earlier switching results in the lines of second field scan lying exactly over the lines of the first field scan. The result is to remove the flicker.

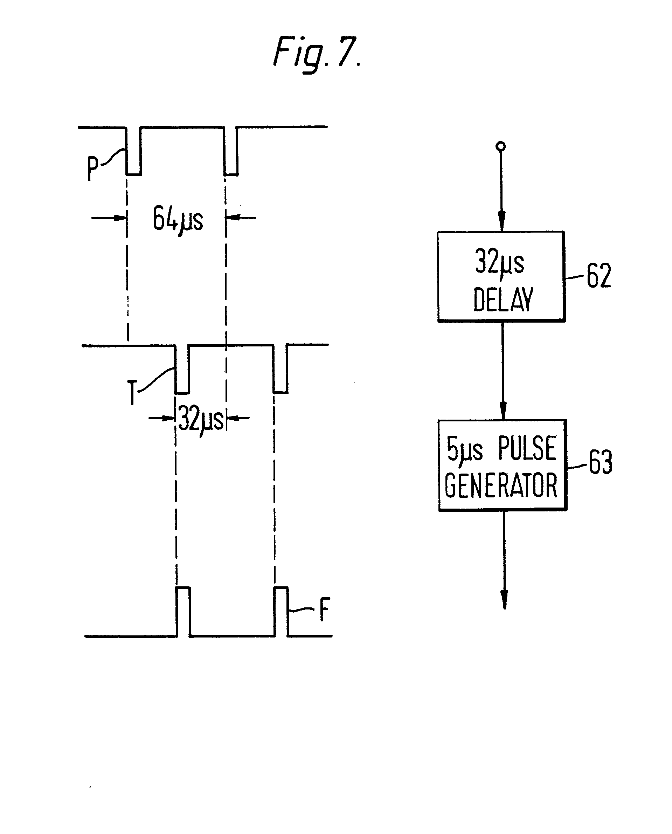

One way in which this can be achieved is illustrated in Figure 7. The line synchronising pulses P from the separator output 59 are fed through a 32μsec delay 62 to produce a trigger signal T for a 5μsec pulse generator 63. The output of the pulse generator 63 provides the interleaving field pulses F which are applied to the output of the integrator of the field synchronising signal separator 55. The waveforms at the various stages are also shown on Figure 7. The way in which the circuits 62 and 63 are connected in the control circuit is shown in Figure 1.

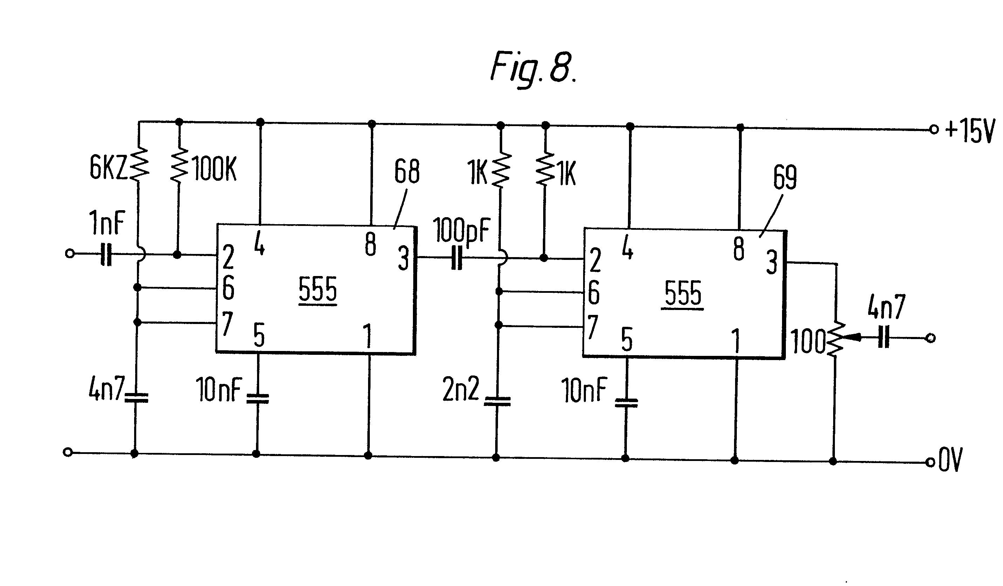

The circuit of Figure 7 can be implemented using a simple dual monostable arrangement of the type shown in Figure 8. The two monostables are implemented using integrated circuits 68, 69 such as type 74123. The arrangement is such that one

- 11 -

0039554

monostable 68 provides the half line period delay (32µsec) and is triggered by line synchronising pulses whilst the other monostable 69 provides the short duration pulse (5µsec) which is applied to the output of the integrator of the control circuit.

Direct comparison of interlaced and non-interlaced displays has shown that it is far easier to view the non-interlaced type of display when characters or graphics are displayed. There is a reduction in eye strain and this could be a significant factor when displays have to be viewed over long periods of time. Compatability with existing broadcast receivers can easily be achieved by providing a control signal when requesting teletext/viewdata services which simply introduces the field trigger circuit of the present invention into the field scan.

With monochrome or high definition colour displays the coarsened line structure may be noticeable and require some form of line broadening. This can be implemented with for example spot wobble or possibly with the introduction of astigmatism into the electron-optics to produce an elliptical scanning beam.

CLAIMS

1. A television type display unit for use in a viewdata or teletext type system including a control circuit for controlling the display characterised in that the control circuit is arranged to trigger the second of two scans which produce a picture frame such that the lines of the second scan substantially completely overlie the lines of the first scan.

2. A display unit as claimed in claim 1 characterised in that the synchronising information relating to the second scan is shifted by approximately one half of one line period.

3. A display unit as claimed in claim 1 or claim 2 characterised in that the control circuit of the unit is arranged such that pulses (18) are inserted at the output of the field trigger integrator of the control circuit, said pulses (18) being arranged to occur substantially mid-way between the line synchronisation pulses (10).

4. A display unit as claimed in any preceding claim including a delay circuit (62) for receiving line synchronising pulses and a pulse generator (63) arranged to be triggered by the output of the delay circuit, the output of the pulse generator being connected
to the output of the integrator in a synchronising
separator (55) of the control circuit.

Fig.1.

EQUALISER

LINE SYNC

FIELD SYNC

10  11  12

*Fig.2.*

14

15
16

*Fig.3.*

*Fig.4.*

30  31

Fig.5.

Fig.6.

*Fig.7.*

Fig.8.

0039554

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 2 426 294 (THOMSON-CSF)<br><br>* Page 2, lines 13-16; page 28, lines 1-31 *<br>---<br><br>ELECTRONICS, vol. 50, no. 4, 17th February, 1977,<br>NEW YORK (US)<br>B. LEBOSS: "Chip programs most CRT functions", pages 119-120<br><br>* Figure; page 119, from column 1, line 15 to column 2, line 2 *<br><br>---------- | 1,2<br><br><br><br><br>1 | G 09 G 1/16<br>H 04 N 5/10<br>        7/04 |

TECHNICAL FIELDS SEARCHED (Int. Cl.³)

G 09 G 1/16
G 09 G 1/04
H 04 N 5/10
H 04 N 7/04

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13.08.1981 | VAN ROOST |

EPO Form 1503.1   06.78